# EUROPÄISCHE PATENTSCHRIFT

(11) **EP 2 326 449 B1**
(45) Veröffentlichungstag und Bekanntmachung des Hinweises auf die Patenterteilung: **13.03.2013**
(21) Anmeldenummer: 09778350.0
(22) Anmeldetag: 04.09.2009
(51) Int. Cl.: B23F 23/12

(54) **ABRICHTWERKZEUG UND VERFAHREN ZUM ABRICHTEN EINES SCHLEIFWERKZEUGS**
DRESSING TOOL AND PROCESS OF DRESSING A GRINDING TOOL
OUTIL DE DRESSAGE ET PROCEDE POUR LE DRESSAGE D'UN OUTIL DE MEULAGE

(30) Priorität: 04.09.2008 EP 08015643
(43) Veröffentlichungstag der Anmeldung: 01.06.2011
(73) Patentinhaber: Gleason-Pfauter Maschinenfabrik GmbH, 71636 Ludwigsburg (DE)
(72) Erfinder: KOBIALKA, Claus, 71672 Marbach a. N. (DE)
(74) Vertreter: Leinweber & Zimmermann
(86) Internationale Anmeldenummer: PCT/EP2009/006453
(87) Internationale Veröffentlichungsnummer: WO 2010/025942

(56) Entgegenhaltungen:
- EP-A1- 0 432 579
- DE-A1- 3 320 042
- DE-A1- 19 624 842
- DE-C1- 19 619 401
- DE-U1- 29 717 193
- US-A- 4 339 895
- US-A- 4 400 916
- US-A- 4 765 095

## Beschreibung

Die Erfindung bezieht sich auf ein Abrichtwerkzeug, das aut einer Verzahnungsschleifmaschine mit einem stationären Maschinenbett, einer in Bezug auf das Maschinenbett längs einer ersten Linearbewegungsachse bewegbaren ersten Linearbewegungseinheit einer an der ersten Linearbewegungseinheit um eine zu deren erster Linearbewegungsachse orthogonale erste Schwenkbewegungsachse schwenkbar angeordneten ersten Schwenkbewegungseinheit, und einer an der ersten Schwenkbewegungseinheit um eine zu der ersten Schwenkbewegungsachse orthogonale Werkzeugspindelachse drehend antreibbar angeordneten Werkzeugspindel einsetzbar ist sowie auf ein Verfahren zum Abrichten eines Schleifwerkzeugs mit einem solchen Abrichtwerkseng.

Derartige Verzahnungsschleifmaschinen dienen zur Hartfeinbearbeitung der Verzahnung eines Werkstücks mit einem Schleifwerkzeug, bei dem es sich beispielsweise um eine Schleifscheibe oder eine Schleifschnecke handeln kann. Das Schleifwerkzeug erleidet durch seinen Bearbeitungseingriff mit dem Werkstück eine Abnutzung. Deshalb muß es nach einer gewissen Anzahl von Bearbeitungsvorgängen abgerichtet werden. Durch das Abrichten wird die erforderliche Geometrie des Schleifwerkzeugs wiederhergestellt und gleichzeitig die Oberfläche des Schleifwerkzeugs geschärft.

Für das Abrichten sind zwei Verfahrensprinzipien bekannt, nämlich das Form-Abrichten und das Profil-Abrichten. Beim Form-Abrichten durchläuft das Abrichtwerkzeug auf dem abzurichtenden Schleifwerkzeug eine gesteuerte Bewegungsbahn und erzeugt dadurch die gewünschte Kontur des Schleifwerkzeugs. Beim Profil-Abrichten ist das Abrichtwerkzeug entsprechend der gewünschten Geometrie des Schleifwerkzeugs ausgebildet.

Eine bekannte Zahnradwälzfräsmaschine (EP 0 614 406 B1) weist einen auf einem Maschinenbett in dessen Längsrichtung horizontal bewegbaren Ständer mit einem daran vertikal bewegbar geführten Schlitten auf, an dessen dem Ständer abgewandter freier Seite ein um eine horizontale Schwenkachse verschwenkbarer Träger für eine Wälzschnecke angeordnet ist, deren Drehachse sich orthogonal zur Schwenkachse des Trägers erstreckt. Das Problem des Abrichtens eines Schleifwerkzeugs tritt bei dieser Zahnradwälzfräsmaschine nicht auf. DE 196 24 842 A1, DE 196 19 401 C1 und EP 0 432 579 A1 zeigen jeweils Abrichtwerkzeuge mit exialer Symmetrie, deren radiale Geometrie von einer Kegelform abweicht. DE 33 20 042 A1 offenbart ein Schleifverfahren von vorverzahnten Rädem mit Epizykloïden mit nur einem Schleitwerkzeug. DE 297 17 193 U1 offenbart ein Abrichtverfahren.

Der Erfindung liegt die Aufgabe zugrunde, ein auf einer Verzahnungsschleifmaschine der ein-gangs genannten Art einsetzbares Abrichtwerzeug zu schaffen, mit dem das jeweils verwendete Schleifwerkzeug variabler abgerichtet werden kann.

Ein zur Lösung der erfindungsgemäßen Aufgabe geeignetes Abrichtwerkzeug ist mit dem ist mit dem in Anspruch 1 angegebenen Merkmalen bereitgestellt.

In verfahrensmäßiger Hinsicht ist an ein Abrichten mit dem erfindungsgemäβen Abrichtwerk- zeug gedacht, insbesondere aut einer. Verzahnungsschleifmaschine, deren Abrichtspindel an einer an der zweiten Linearbewegungseinheit um eine zu der zweiten Linearbewegungsachse parallele zweite Schwenkbewegungsachse schwenkbar angeordneten zweiten Schwenkbewegungseinheit gelagert ist, indem die Schwenkwinkelstellung der mit einem Abrichtwerkzeug versehenen Abrichtspindel in Bezug auf die zweite Schwenkbewegungsachse auf einen an ein auf der Werkzeugspindel angeordnetes Schleifwerkzeug angepaßten festen Wert eingestellt und das Abrichtwerkzeug mit dem Schleifwerkzeug gemäß einem gewünschten Abrichtverfahren in Eingriff gebracht wird.

Dadurch ist es mit diesen Verzahnungsschleifmaschine und dem darauf ausgeführten Abrichtverfahren möglich, Schleifwerkzeuge unterschiedlicher Art, beispielsweise Schleifschnecken oder Schleifscheiben, nach einem jeweils gewünschten Abrichtverfahren, beispielsweise Profil-Abrichten oder Form-Abrichten, abzurichten.

Außerdem wird durch die Achsanordnung einer solchen Verzahnungsschleifmaschine eine besonders geringe Werkstückaufspannhöhe und somit eine hohe Systemsteifigkeit erreicht.

Vorzugsweise soll die erste Schwenkbewegungsachse die Werkzeugspindelachse schneiden. Soweit dieses Erfordernis nicht genau erfüllt wird, kann dem durch eine softwaremäßige Korrektur in der Steuerung Rechnung getragen werden. In jedem Fall soll aber die Abweichung klein sein. Vorzugsweise soll der Kreuzungspunkt dieser beiden Achsen auf ein Gebiet lokalisiert sein, dessen Ausdehnung weniger als 0,1 mm beträgt.

Die zweite Linearbewegungsachse und die zweite Schwenkbewegungsachse sollen möglichst genau miteinander fluchten und die Werkzeugspindelachse schneiden. Sofern dies nicht exakt eingehalten wird, soll der Toleranzbereich für den Kreuzungspunkt dieser Achsen vorzugsweise kleiner als 5 µm sein.

Vorzugsweise soll auch die zwischen verschiedenen Achsen geforderte Orthogonalität möglichst genau eingehalten werden. Etwaige Toleranzabweichungen können jedoch durch die Steuerungssoftware ausgeglichen werden.

Die Abrichtbereiche des Abrichtwerkzeugs sind insbesondere in bekannter Weise mit einem an den Körper des Abrichtwerkzeugs gebundenen Schleifmittel belegt. Die Belegung kann im Positiv- oder Negativverfahren erfolgen. Solche gebräuchlichen Schleifmittel sind beispielsweise Korund in seinen unterschiedlichen Modifikationen, Bornitrid (CBN) oder Diamant.

In der folgenden Beschreibung wird die Erfindung anhand eines Ausführungsbeispiels unter Bezugnahme auf die Zeichnung näher erläutert. Hierin zeigen:
- Fig. 1: eine perspektivische Ansicht einer Verzahnungsschleifmaschine, deren Gehäuse entfernt worden ist,
- Fig. 2: eine detailliertere Ansicht einer Anordnung der auch in Fig. 1 erkennbaren Spindeln für ein Schleifwerkzeug und ein Abrichtwerkzeug, und
- Fig. 3: eine Ansicht auf die Rückseite der mit ihrem Gehäuse versehenen Verzahnungsschleifmaschine und einem dort angeordneten Werkzeugwechsler,
- Fig. 4 (a) und 4 (b): eine schematische Darstellung für das Profilabrichten einer Wälzschleifschnecke bzw. das Formabrichten einer Profilschleifscheibe.

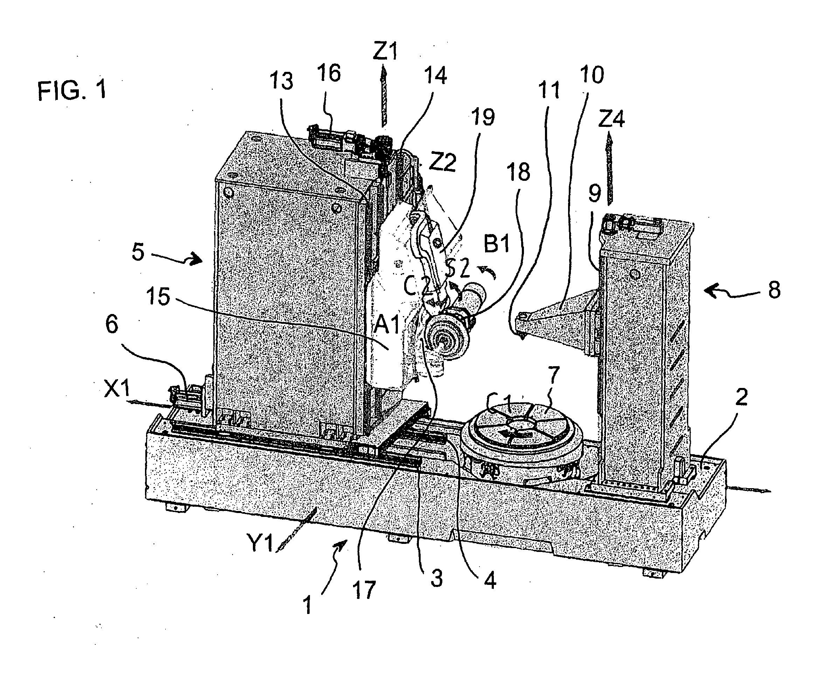

Gemäß Fig. 1 weist eine Verzahnungsschleifmaschine ein Maschinenbett 1 auf, das im wesentlichen die Form eines langgestreckten, flachen Quaders besitzt, dessen Längsachse sich parallel zu einer für die Aufstellung der Verzahnungsschleifmaschine vorgesehenen Bodenebene erstreckt, dessen eine größere Seitenfläche die zur Bodenebene weisende Unterseite und dessen ihr gegenüberliegende andere größere Seitenfläche 2 die Oberseite bildet. An der Oberseite 2 sind sich parallel zur Quaderlängsachse erstreckende Linearführungen 3, 4 angeordnet, auf denen ein Ständer 5 längs einer zur Quaderlängsachse parallelen vierten Linearbewegungsachse X1 bewegbar abgestützt ist. Die Bewegung des Ständers 5 längs der vierten Linearbewegungsachse X1 erfolgt durch einen gesteuerten Linearbewegungsantrieb 6.

Die Linearführungen 3, 4 erstrecken sich etwa über die in Fig. 1 linke Hälfte des Maschinenbetts 1. Nahe dem in Fig. 1 rechten Ende der Linearführungen 3, 4 ist auf der Oberseite 2 des Maschinenbetts 1 eine um eine zur Oberseite 2 orthogonale Werkstückdrehachse C1 drehend antreibbare Drehbewegungseinheit 7 angeordnet. Auf ihr wird ein das Werkstück darstellendes, zu schleifendes Zahnrad aufgespannt und um seine Achse gemäß den Erfordernissen des Schleifvorgangs gesteuert gedreht.

Über dem in Fig. 1 rechten Endbereich des Maschinenbetts 1 erhebt sich eine zu dessen Oberseite 2 orthogonale Säule 8, deren zur Oberseite 2 paralleler Querschnitt etwa quadratisch ist. An der zur Drehbewegungseinheit 7 weisenden Seite der Säule 8 sind zur Oberseite 2 orthogonale Linearführungen 9 angeordnet, an denen ein in Richtung auf die Drehbewegungseinheit 7 auskragender Reitstock 10 in einer zur Werkstückdrehachse C1 parallelen Linearbewegungsrichtung verschiebbar geführt ist. Der Reitstock 10 weist einen mit der Werkstückdrehachse C1 fluchtenden Zentrieransatz 11 auf, der mit dem auf der Drehbewegungseinheit 7 aufgespannten Werkstück zentrierend in Eingriff gebracht wird.

Der Ständer 5 ist von vier zur Oberseite 2 des Maschinenbetts 1 orthogonalen Seitenflächen begrenzt, von denen sich zwei parallel und zwei orthogonal zur Längsachse des quaderförmigen Maschinenbetts 1 erstrecken. An der zur Drehbewegungseinheit 7 weisenden Seitenfläche 12 sind sich orthogonal zur Oberseite 2 und parallel zur Werkstückdrehachse C1 erstreckende Linearführungen 13, 14 angeordnet, auf denen eine erste Linearbewegungseinheit 15 längs einer zur Werkstückdrehachse C1 parallelen ersten Linearbewegungsachse Z1 bewegbar geführt ist. Die Bewegung der ersten Linearbewegungseinheit 15 längs der ersten Linearbewegungsachse Z1 erfolgt durch einen gesteuerten Linearbewegungsantrieb 16.

In einem zum Maschinenbett 1 weisenden unteren Bereich der ersten Linearbewegungseinheit 15 ist an ihrer zur Drehbewegungseinheit 7 weisenden Seite eine erste Schwenkbewegungseinheit 17 um eine zu der ersten Linearbewegungsachse Z1 orthogonale und zur Längsachse des quaderförmigen Maschinenbetts 1 parallele erste Schwenkbewegungsachse A1 schwenkbar angeordnet. An dieser ersten Schwenkbewegungseinheit 17 ist eine Werkzeugspindel 18 mit zur ersten Schwenkbewegungsachse A1 orthogonaler Werkzeugspindelachse B1 angeordnet. Die Werkzeugspindel 18 ist um ihre Werkzeugspindelachse B1 durch einen gesteuerten Antrieb drehend antreibbar. Ferner ist sie längs einer mit der Werkzeugspindelachse B1 fluchtenden dritten Linearbewegungsachse Y1 gesteuert bewegbar.

An der zur Drehbewegungseinheit 7 weisenden Stirnseite des dem Maschinenbett 1 abgewandten oberen Bereichs der ersten Linearbewegungseinheit 15 ist eine zweite Linearbewegungseinheit 19 längs einer zweiten Linearbewegungsachse Z2 gesteuert bewegbar geführt. Die zweite Linearbewegungsachse Z2 erstreckt sich in einer zu der ersten Linearbewegungsachse Z1 und zu der ersten Schwenkbewegungsachse A1 parallelen Ebene. In dieser Ebene ist sie gegen die erste Linearbewegungsachse Z1 derart geneigt, daß sie in dem vom Maschinenbett 1 weg weisenden Richtungssinn unter einem spitzen Winkel auf die erste Linearbewegungsachse Z1 zuläuft.

An dem zur Werkzeugspindel 18 weisenden unteren Ende der zweiten Linearbewegungseinheit 19 ist eine zweite Schwenkbewegungseinheit 20 angeordnet. Diese ist um eine zur zweiten Linearbewegungsachse Z2 parallele zweite Schwenkbewegungsachse C2 schwenkbar. An dieser zweiten Schwenkbewegungseinheit 20 ist eine um eine Abrichtspindelachse S2 drehend antreibbare Abrichtspindel 21 angeordnet. Die Abrichtspindelachse S2 erstreckt sich orthogonal zu der zweiten Schwenkbewegungsachse C2 und der zweiten Linearbewegungsachse Z2.

Die Werkzeugspindel 18 dient zur Aufnahme und zum drehenden Antrieb eines Verzahnungsschleifwerkzeugs, mit dem die Verzahnung eines auf der Drehbewegungseinheit 7 aufgespannten Werkstücks feinbearbeitet wird. Insbesondere kann es sich bei dieser Feinbearbeitung um Wälzschleifen oder um Profilschleifen handeln. Das Verzahnungsschleifwerkzeug kann beispielsweise eine Schleifscheibe oder eine Schleifschnecke sein.

Die Abrichtspindel 21 dient zur Aufnahme und zum drehenden Antrieb eines Abrichtwerkzeugs für das Formabrichten oder das Profilabrichten. Beim Formabrichten durchläuft das scheibenförmige Abrichtwerkzeug auf dem abzurichtenden Schleifwerkzeug eine gesteuerte Bewegungsbahn und erzeugt dadurch die gewünschte Kontur des Schleifwerkzeugs. Beim Profilabrichten ist das scheibenförmige Abrichtwerkzeug entsprechend der gewünschten Kontur des Schleifwerkzeugs ausgebildet.

Die für die verschiedenen Abrichtverfahren und Werkzeuggeometrien erforderlichen Relativstellungen zwischen dem Abrichtwerkzeug und dem Schleifwerkzeug werden durch eine computerisierte Steuerung der entsprechenden Bewegungsachsen bewirkt. Beispielsweise wird für das Profilabrichten die Schwenkwinkelstellung der mit dem Abrichtwerkzeug 23 versehenen Abrichtspindel 21 in Bezug auf die zweite Schwenkbewegungsachse C2 auf einen festen Wert geklemmt. Ferner wird das Verhältnis zwischen der Drehzahl der Abrichtspindel 21 um die Abrichtspindelachse S2 und der Drehzahl der Werkzeugspindel 18 um die Werkzeugspindelachse B1 auf einen festen Wert eingestellt. Die Bewegungen längs der zweiten Linearbewegungsachse Z2 und der dritten Linearbewegungsachse Y1 werden gemäß dem Profil-Abrichtverfahren gesteuert. Für das Form-Abrichten wird die Schwenkwinkelstellung der Abrichtspindel 21 in Bezug auf die zweite Schwenkbewegungsachse C2 auf einen durch den Bezugsdurchmesser des Schleifwerkzeugs 22 bestimmten Wert eingestellt. Die Drehwinkelstellung der Abrichtspindel 21 in Bezug auf die Abrichtspindelachse S2 und die Bewegung längs der dritten Linearbewegungsachse Y1 werden in Abhängigkeit von der Drehwinkelstellung der Werkzeugspindel 18 in Bezug auf die Werkzeugspindelachse B1 gemäß dem Formabrichtverfahren gesteuert. Für ein verschwenkungsfreies Schleifwerkzeug wird zusätzlich die Bewegung längs der zweiten Linearbewegungsachse Z2 gesteuert.

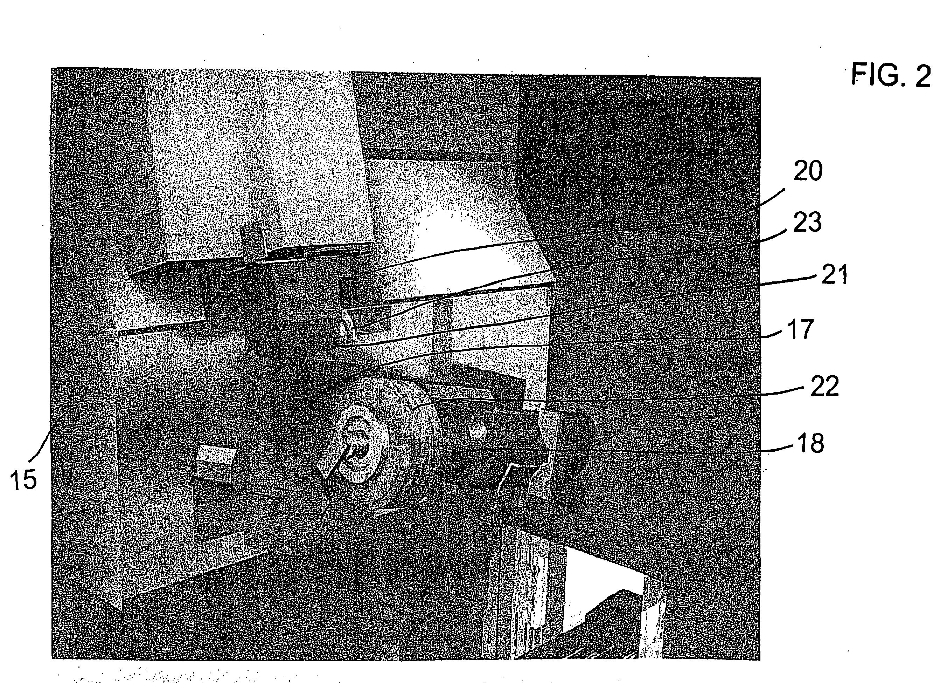

In Fig. 2 ist der Fall dargestellt, daß das von der Schleifspindel 18 angetriebene Schleifwerkzeug 22 eine Schleifschnecke ist. Ferner zeigt Fig. 2 das scheibenförmige Abrichtwerkzeug 23 auf der an der zweiten Schwenkbewegungseinheit 20 angeordneten Abrichtspindel 21.

In Fig. 2 bezeichnet ebenso wie in Fig. 1 das Bezugszeichen 15 die erste Linearbewegungseinheit und das Bezugszeichen 17 die erste Schwenkbewegungseinheit.

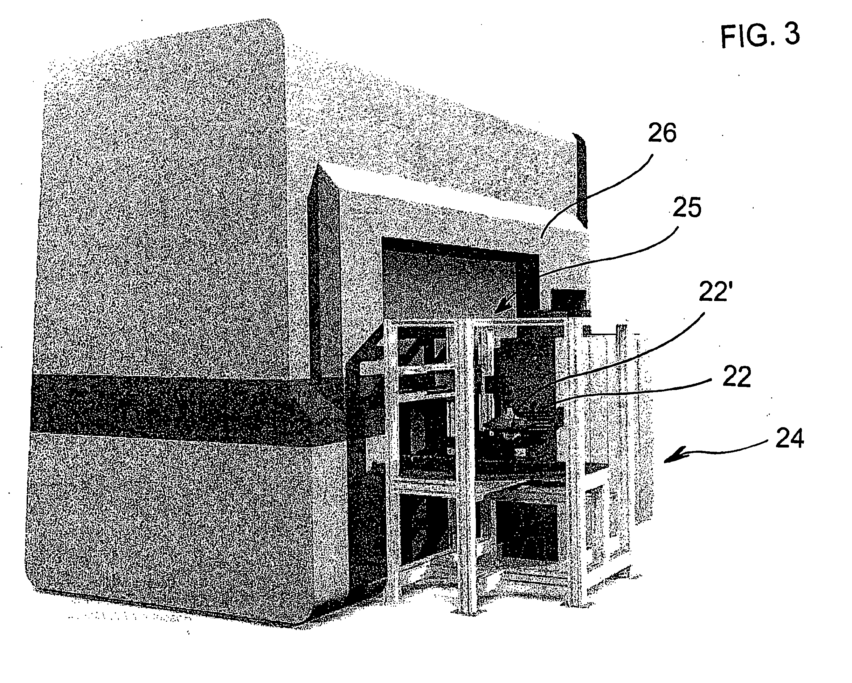

In der perspektivischen Ansicht von Fig. 3 sind die Rückseite und die in Fig. 1 rechte Seite der mit ihrem Gehäuse versehenen Verzahnungsschleifmaschine sichtbar. Innerhalb eines außerhalb des Gehäuses vor der Rückseite angeordneten Gestellrahmens 24 werden Schleifwerkzeuge 22, 22' für den Angriff eines Werkzeugwechslers vorgehalten. Mit diesem Werkzeugwechsler wird jeweils bei Bedarf eines dieser Werkzeuge längs einer in einer zu der ersten Linearbewegungsachse Z1 und zu der Werkstückdrehachse C1 orthogonalen Ebene verlaufenden Bewegungsbahn durch eine in der Rückseite vorgesehene Gehäuseöffnung 25 hindurch bis in den Bewegungsbereich der Werkzeugspindel 18 eingefahren. Letztere übernimmt sodann durch eine entsprechend gesteuerte Bewegung ihrer Bewegungsachsen das Werkzeug von dem Werkzeugwechsler und spannt es in der in Fig. 1 und 2 dargestellten Lage auf die Werkzeugspindel 18 auf. Es versteht sich, daß dieser Werkzeugwechsler in einem umgekehrten Bewegungsablauf auf der Werkzeugspindel 18 aufgespannte Werkzeuge, die auszuwechseln sind, übernimmt und zur Ablage in dem Gestellrahmen 24 nach außen transportiert. Wenn keine Werkzeugwechselvorgänge stattfinden, wird die Gehäuseöffnung 25 durch eine Schiebetür 26 verschlossen.

Die der Rückseite gegenüberliegende Vorderseite des Gehäuses (nicht dargestellt) ist mit einer horizontal verschiebbaren Schiebetür versehen, in deren Öffnungsstellung der zwischen dem Ständer 5 und der Säule 8 liegende Arbeitsbereich der Verzahnungsschleifmaschine von außen zugänglich ist und in deren Schließstellung die Verzahnungsschleifmaschine nach außen hin völlig abgeschirmt ist.

Die Fig. 4 (a) und (b) zeigen jeweils in einem durch die Werkzeugspindelachse B1 und die Abrichtspindelachse S2 gelegten Axialschnitt einen Abrichtvorgang für den Fall, daß es sich bei dem Verzahnungsschleifwerkzeug 22 um eine Wälzschleifschnecke 22' (Fig. 4 (a)) bzw. eine Schleifscheibe 22" (Fig. 4 (b)) handelt. Das Abrichtwerkzeug 23 ist in beiden Fällen dasselbe.

Im einzelnen weist das Abrichtwerkzeug 23 einen um die Abrichtspindelachse S2 rotationssymmetrischen, scheibenartigen Körper 27 auf, von dem jeweils nur die sich in den Fig. 4 (a) und (b) oberhalb der Abrichtspindelachse S2 erstreckende radiale Hälfte dargestellt ist. Dieser scheibenartige Körper ist zwischen zwei voneinander axial beabstandeten Stirnseiten 28, 28' begrenzt. Am radial äußeren Umfangsbereich jeder dieser Stirnseiten 28, 28' ist ein Abrichtbereich 29, 29' ausgebildet. In jedem dieser Abrichtbereiche 29, 29' ist der Körper 27 des Abrichtwerkzeugs 23 mit einem an den Körper 27 gebundenen Schleifmittel belegt. In dem radial inneren Bereich des Körpers 27 ist eine zu der Abrichtspindelachse S2 koaxiale Nabe 30 ausgebildet, mit der der Körper 27 auf der Abrichtspindel 21 aufspannbar ist.

Der für das Profilabrichten ausgebildete Abrichtbereich 29 erstreckt sich in dem in Fig. 4 (a) und (b) dargestellten Axialschnitt von einer radialen Schulter 31 des Körpers 27 aus mit einer gegen die ihm gegenüberliegende Stirnseite 28' hin gerichteten Neigung radial bis zum radial äußeren Rand 32 des Körpers 27. Falls das abzurichtende Schleifwerkzeug für das Schleifen einer unmodifizierten Evolventenschraubenfläche bestimmt ist, ist dieser Verlauf geradlinig; bei Modifikationen ist er entsprechend modifiziert. Dagegen verläuft der für das Formabrichten ausgebildete Abrichtbereich 29' in dem Axialschnitt von der Stirnseite 28' nahe dem äußeren Rand 32 zunächst bogenförmig gekrümmt vorspringend und sodann bogenförmig gekrümmt in Richtung auf den äußeren Rand 32 zurück.

Fig. 4 (a) zeigt den Bearbeitungseingriff zwischen dem Abrichtwerkzeug 23 und der Wälzschleifschnecke 22' beim Profilabrichten. In der linken Abbildung von Fig. 4 (a) steht der Abrichtbereich 29 linienartig mit der linken Flanke der Wälzschleifschnecke 22' in Bearbeitungseingriff. Die Zustellung erfolgt, wie durch einen Pfeil angedeutet, axial in Richtung auf die linke Flanke. In der rechten Abbildung von Fig. 4a ist der Profilabrichtvorgang für die rechte Flanke der Wälzschleifschnecke 22' dargestellt. Die Ausrichtung des Bearbeitungswerkzeugs 23 und die Zustellbewegung erfolgen dabei spiegelbildlich zu Fig. 4 (a). In beiden Fällen befindet sich der für das Formabrichten ausgebildete Abrichtbereich 29' in einem Abstand von den Flanken der Wälzschleifschnecke 22' und bleibt dadurch während des gesamten Bearbeitungsvorgangs inaktiv.

Dagegen bleibt bei dem in Fig. 4 (b) dargestellten Formabrichten der Schleifscheibe 22' der für das Profilabrichten ausgebildete Abrichtbereich 29 außer Eingriff und dadurch inaktiv, während der für das Formabrichten ausgebildete Abrichtbereich 29' mit der linken Seite der Schleifscheibe 22' (Fig. 4 (b) links) bzw. mit der rechten Seite der Schleifscheibe 22' punktartig in Eingriff steht und jeweils an diesen Seiten längs einer die gewünschte Kontur erzeugenden Bewegungsbahn entlanggeführt wird. Die in der Zeichnungsebene von Fig. 4 (b) liegende Komponente dieser Bewegungsbahn ist jeweils durch einen Pfeil angedeutet.

### Verzeichnis der Bezugszeichen

- 1: Maschinenbett
- 2: Oberseite
- 3, 4: Linearführungen
- 5: Ständer
- X1: vierte Linearbewegungsachse
- 6: Linearbewegungsantrieb
- 7: Drehbewegungseinheit
- 8: Säule
- 9: Linearführungen
- 10: Reitstock
- C1: Werkstückdrehachse
- 11: Zentrieransatz
- 12: Seitenfläche
- 13, 14: Linearführungen
- 15: erste Linearbewegungseinheit
- 16: Linearbewegungsantrieb
- 17: erste Schwenkbewegungseinheit
- A1: erste Schwenkbewegungsachse
- 18: Werkzeugspindel
- B1: Werkzeugspindelachse
- Y1: dritte Linearbewegungsachse
- 19: zweite Linearbewegungseinheit
- Z2: zweite Linearbewegungsachse
- 20: zweite Schwenkbewegungseinheit
- C2: zweite Schwenkbewegungsachse
- 21: Abrichtspindel
- S2: Abrichtspindelachse
- 22: Schleifwerkzeug
- 22': Wälzschleifschnecke
- 22": Schleifscheibe
- 23: Abrichtwerkzeug
- 24: Gestellrahmen
- 25: Gehäuseöffnung
- 26: Schiebetür
- 27: scheibenförmiger Körper
- 28, 28': Stirnseiten
- 29, 29': Abrichtbereich
- 30: Nabe
- 31: radiale Schulter
- 32: äußerer Rand

## Patentansprüche

1. Abrichtwerkzeug mit einem um eine als Drehachse dienende axiale Achse (S2) rotationssymmetrischen scheibenartigen Körper (27), der zwischen zwei voneinander axial beabstandeten Stirnseiten (28, 28') begrenzt ist, an deren radial äußeren Umfangsbereichen zum Bearbeitungseingriff mit einem Schleifwerkzeug (22, 22', 22") einer Verzahnungsschleifmaschine dienende Abrichtbereiche (29, 29') ausgebildet sind, wobei ein erster Abrichtbereich (29') für das Formabrichten, bei dem der erste Abrichtbereich (29') auf dem Schleifwerkzeug (22, 22', 22") eine dessen gewünschte Kontur erzeugende gesteuerte Bewegungsbahn durchläuft, ausgebildet ist, und ein zweiter Abrichtbereich (29) für das Profilabrichten, bei dem der zweite Abrichtbereich (29) entsprechend der gewünschten Kontur des Schleifwerkzeugs (22, 22', 22") profiliert ist, ausgebildet ist, **gekennzeichnet durch** eine axial unsymmetrische Ausbildung des Abrichtwerkzeuges, bei welcher der erste Abrichtbereich (29') nur an einer (28') der Stirnseiten und der zweite Abrichtbereich (29) nur an der anderen Stirnseite (28) gebildet ist, so daß **durch** Bearbeitung des Schleifwerkzeuges mit wahlweise der einen (28') oder der anderen (28) Stirnseite das Form- oder Profilverfahren ausgeführt werden kann.

2. Abrichtwerkzeug nach Anspruch 1, **dadurch gekennzeichnet, daß** der für das Formabrichten ausgebildete erste Abrichtbereich (29'), im Axialschnitt des Abrichtwerkzeugs gesehen, gekrümmt ausgebildet ist.

3. Abrichtwerkzeug nach Anspruch 1 oder 2, **dadurch gekennzeichnet, daß** im Axialschnitt des Abrichtwerkzeuges der für das Profilabrichten ausgebildete zweite Abrichtbereich (29) einem Schnitt des abzurichtenden Bereichs des Schleifwerkzeugs entspricht.

4. Abrichtwerkzeug nach einem der Ansprüche 1 bis 3, **dadurch gekennzeichnet, daß** die Abrichtbereiche (29, 29') mit einem an den Körper (27) des Abrichtwerkzeugs (23) gebundenen Schleifmittel belegt sind.

5. Abrichtwerkzeug nach einem der Ansprüche 1 bis 3, **dadurch gekennzeichnet, daß** in dem Körper (27) des Abrichtwerkzeugs (23) eine zu dessen axialer Achse (S2) koaxiale und zu dessen Aufspannung auf einer drehend antreibbaren Abrichtspindel (21) dienende Nabe (30) ausgebildet ist.

6. Verfahren zum Abrichten eines Schleifwerkzeurgs mit einem Abrichtwerkzeug nach einem nach einem der Ansprüche 1 bis 5.

7. Verfahren nach Anspruch 6, ausgeführt in einer Verzahnungsschleifmaschine mit einem stationären Maschinenbett (1), einer in Bezug auf das Maschinenbett (1) längs einer ersten Linearbewegungsachse (Z1) bewegbaren ersten Linearbewegungseinheit (15) einer an der ersten Linearbewegungseinheit (15) um eine zu deren erster Linearbewegungsachse (Z1) orthogonale erste Schwenkbewegungsachse (A1) schwenkbar angeordneten ersten Schwenkbewegungseinheit (17), und einer an der ersten Schwenkbewegungseinheit (17) um eine zu der ersten Schwenkbewegungsachse (A1) orthogonale Werkzeugspindelachse (B1) drehend antreibbar angeordneten Werkzeugspindel (18), wobei an der ersten Linearbewegungseinheit (15) eine längs einer zweiten Linearbewegungsachse (Z2) bewegbare zweite Linearbewegungseinheit (19) angeordnet ist, an der eine um eine zu der zweiten Linearbewegungsachse (Z2) orthogonale Abrichtspindelachse (S2) drehend antreibbare Abrichtspindel (21) angeordnet ist, und die Abrichtspindel (21) an einer an der zweiten Linearbewegungseinheit (19) um eine zu der zweiten Linearbewegungsachse (Z2) parallele zweite Schwenkbewegungsachse (C2) schwenkbar angeordneten zweiten Schwenkbewegungseinheit (20) gelagert ist, wobei die Schwenkwinkelstellung der mit einem Abrichtwerkzeug (23) versehenen Abrichtspindel (21) in Bezug auf die zweite Schwenkbewegungsachse (C2) auf einen an ein auf der Werkzeugspindel (18) angeordnetes Schleifwerkzeugs (22) angepaßten festen Wert eingestellt und das Abrichtwerkzeug (23) mit dem Schleifwerkzeug (22) gemäß einem gewünschten Abrichtverfahren in Eingriff gebracht wird.

8. Verfahren nach Anspruch 7, **dadurch gekennzeichnet, daß** das Verhältnis zwischen der Drehzahl der Abrichtspindel (21) um die Abrichtspindelachse (S2) und der Drehzahl der Werkzeugspindel (18) um die Werkzeugspindelachse (B1) auf einen festen Wert eingestellt und die Bewegungen längs der zweiten und dritten Linearbewegungsachse (Z2, Y1) gemäß einem Profilabrichtverfahren gesteuert werden.

9. Verfahren nach Anspruch 7, **dadurch gekennzeichnet, daß** die Schwenkwinkelstellung der Abrichtspindel (21) in Bezug auf die zweite Schwenkbewegungsachse (C2) auf einen durch den Bezugsdurchmesser des Schleifwerkzeugs bestimmten Wert eingestellt und die Drehwinkelstellung der Abrichtspindel (21) in Bezug auf die Abrichtspindelachse (S2) und die Bewegung längs der dritten Linearbewegungsachse (Y1) in Abhängigkeit von der Drehwinkelstellung der Werkzeugspindel (18) in Bezug auf die Werkzeugspindelachse (B1) gemäß einem Formabrichtverfahren gesteuert werden.

10. Verfahren nach Anspruch 9, **dadurch gekennzeichnet, daß** für ein verschränkungsfreies Schleifwerkzeug zusätzlich die Bewegung längs der zweiten Linearbewegungsachse (Z2) gesteuert wird.

## Claims

1. A dressing tool with a disc-like body (27) that is rotationally symmetrical about an axial axis (S2) serving as a rotary axis and that is delimited between two face sides (28, 28') that are axially spaced apart from each other, and in the radially outer peripheral regions of which dressing regions (29, 29') are formed which are used to engage for machining with a grinding tool (22, 22', 22") of a gear grinding machine, a first dressing region (29') being formed for the form dressing, wherein the first dressing region (29') on the grinding tool (22, 22', 22") passes through a controlled path of motion producing its desired contour, and a second dressing region (29) being formed for the profile dressing, wherein the second dressing region (29) is profiled according to the desired contour of the grinding tool (22, 22', 22"), **characterised by** an axially asymmetrical design of the dressing tool in which the first dressing region (29') is only formed on one (28') of the face sides and the second dressing region (29) is only formed on the other face side (28) so that the forming or profiling method can be implemented by machining of the grinding tool with optionally one (28') or the other (28) face side.

2. The dressing tool according to Claim 1, **characterised in that** the first dressing region (29') formed for the form dressing is curved in form as viewed in the axial section of the dressing tool.

3. The dressing tool according to Claim 1 or 2, **characterised in that** in the axial section of the dressing tool the second dressing region (29) formed for the profile dressing corresponds to a section of the region of the grinding tool to be dressed.

4. The dressing tool according to any of Claims 1 to 3, **characterised in that** the dressing regions (29, 29') are coated with a layer of grinding agent that is bonded to the body (27) of the dressing tool (23).

5. The dressing tool according to any of Claims 1 to 3, **characterised in that** in the body (27) of the dressing tool (23) a hub (30) is formed which is coaxial to its axial axis (S2) and serves to clamp the latter on a dressing spindle (21) that can be driven in rotary motion.

6. A method for dressing a grinding tool with a dressing tool according to any of Claims 1 to 5.

7. The method according to Claim 6, implemented in a gear grinding machine with a stationary machine bed (1), a first linear motion unit (15) moveable relative to the machine bed (1) along a first linear motion axis (Z1), a first swivel motion unit (17) arranged on the first linear motion unit (15) so as to be able to swivel about a first swivel motion axis (A1) that is orthogonal to said first linear motion axis (Z1), and a tool spindle (18) arranged on the first swivel motion unit (17) so as to be able to be driven in rotary motion about a tool spindle axis (B1) that is orthogonal to said first swivel motion axis (A1), there being arranged on the first linear motion unit (15) a second linear motion unit (19) which is moveable along a second linear motion axis (Z2), there being arranged on said second linear motion unit (19) a dressing spindle (21) that can be driven in rotary motion about the dressing spindle axis (S2) that is orthogonal to said second linear motion axis (Z2), and the dressing spindle (21) being mounted on a second linear motion unit (20) arranged on the second linear motion unit (19) such as to be able to swivel about a second swivel motion axis (C2) parallel to the second linear motion axis (Z2), the pivot angle position of the dressing spindle (21) provided with a dressing tool (23) being set relative to the second pivot motion axis (C2) to a fixed value matched to a grinding tool (22) arranged on the tool spindle (18), and the dressing tool (23) being engaged with the grinding tool (22) according to a desired dressing method.

8. The method according to Claim 7, **characterised in that** the ratio between the rotation speed of the dressing spindle (21) around the dressing spindle axis (S2) and the rotation speed of the tool spindle (18) around the tool spindle axis (B1) is set at a fixed value and the movements along the second and third linear motion axis (Z2, Y1) are controlled according to a profile dressing method.

9. The method according to Claim 7, **characterised in that** the swivel angle position of the dressing spindle (21) relative to the second swivel motion axis (C2) is set at a value determined by the reference diameter of the grinding tool and the rotary angle position of the dressing spindle (21) relative to the dressing spindle axis (S2) and the motion along the third linear motion axis (Y1) are controlled depending on the rotary angle position of the tool spindle (18) relative to the tool spindle axis (B1) according to a form dressing method.

10. The method according to Claim 9, **characterised in that** additionally, for a non-interlocking grinding tool, the motion along the second linear motion axis (Z2) is controlled.

## Revendications

1. Outil de dressage, comprenant un corps (27) en forme de disque, symétrique en rotation autour d'un axe (S2) servant d'axe de rotation, lequel corps est délimité entre deux faces frontales (28, 28') axialement espacées l'une de l'autre et sur des zones du pourtour radial extérieur desquelles sont prévues des zones de dressage (29, 29') servant à venir en prise avec un outil de rectification (22, 22', 22") d'une rectifieuse pour engrenages à des fins d'usinage, une première zone de dressage (29') étant conçue pour le dressage de forme, au cours duquel la première zone de dressage (29') passe sur l'outil de rectification (22, 22', 22") en suivant une voie de déplacement contrôlée produisant le contour souhaité pour celui-ci, et une seconde zone de dressage (29) étant conçue pour le dressage de profil, au cours duquel la seconde zone de dressage (29) est profilée conformément au contour souhaité de l'outil de rectification (22, 22', 22"), **caractérisé par** une conception axialement asymétrique de l'outil de dressage selon laquelle la première zone de dressage (29') n'est formée que sur une (28') des faces frontales et la seconde zone de dressage (29) n'est formée que sur l'autre (28) face frontale, de telle manière que, en effectuant l'usinage de l'outil de rectification par soit l'une (28') des faces frontales, soit l'autre (28) des faces frontales, on puisse réaliser le procédé de formage ou de profilage.

2. Outil de dressage selon la revendication 1, **caractérisé en ce que** la zone de dressage (29') conçue pour le dressage de forme présente une courbure, l'outil de dressage étant vu en coupe axiale.

3. Outil de dressage selon la revendication 1 ou 2, **caractérisé en ce que**, l'outil de dressage étant vu en coupe axiale, la zone de dressage (29) conçue pour le dressage de profil correspond à une coupe de la zone à dresser de l'outil de rectification.

4. Outil de dressage selon l'une des revendications 1 à 3, **caractérisé en ce que** les zones de dressage (29, 29') sont pourvues d'un abrasif lié au corps (27) de l'outil de dressage (23).

5. Outil de dressage selon l'une des revendications 1 à 3, **caractérisé en ce qu'**un moyeu (30) est conçu dans le corps (27) de l'outil de dressage (23), lequel est coaxial à l'axe de rotation (S2) de celui-ci et sert à sa fixation sur une broche de dressage (21) susceptible d'être entraînée en rotation.

6. Procédé de dressage d'un outil de rectification à l'aide d'un outil de dressage selon l'une des revendications 1 à 5.

7. Procédé selon la revendication 6, mis en oeuvre dans une rectifieuse pour engrenages présentant un banc fixe (1), une première unité à déplacement linéaire (15) mobile par rapport au banc (1) le long d'un premier axe de déplacement linéaire (Z1), une première unité à mouvement de pivotement (17) montée sur la première unité à déplacement linéaire (15) de manière à pouvoir pivoter sur un premier axe de pivotement (A1) orthogonal à son premier axe de déplacement linéaire (Z1), et une broche d'outil (18) montée sur la première unité à mouvement de pivotement (17) de manière à pouvoir être entraînée en rotation autour d'un axe de broche d'outil (B1) orthogonal au premier axe de pivotement (A1), en sachant qu'il est agencé, sur la première unité à déplacement linéaire (15), une deuxième unité à déplacement linéaire (19) qui est déplaçable le long d'un deuxième axe de déplacement linéaire (Z2) et sur laquelle est agencée une broche de dressage (21) susceptible d'être entraînée en rotation autour d'un axe de broche de dressage (S2) orthogonal au deuxième axe de déplacement linéaire (Z2), et que la broche de dressage (21) est montée sur une deuxième unité à mouvement de pivotement (20) agencée sur la deuxième unité à déplacement linéaire (19) de manière à pouvoir pivoter autour d'un deuxième axe de pivotement (C2) parallèle au deuxième axe de déplacement linéaire (Z2), la position angulaire de pivotement de la broche de dressage (21) équipée de l'outil de dressage (23) par rapport au deuxième axe de pivotement (C2) étant fixée à une valeur fixe adaptée à un outil de rectification (22) agencé sur la broche d'outil (18) et l'outil de dressage (23) étant amené en prise avec l'outil de rectification (22) selon un procédé de dressage souhaité.

8. Procédé selon la revendication 7, **caractérisé en ce que** le rapport entre la vitesse de rotation de la broche de dressage (21) autour de l'axe de broche de dressage (S2) et la vitesse de rotation de la broche d'outil (18) autour de l'axe de broche d'outil (B1) est réglé à une valeur fixe et les déplacements le long du deuxième et du troisième axe de déplacement linéaire (Z2, Y1) sont contrôlés selon un procédé de dressage de profil.

9. Procédé selon la revendication 7, **caractérisé en ce que** la position angulaire de pivotement de la broche de dressage (21) par rapport au deuxième axe de pivotement (C2) est fixée à une valeur définie par le diamètre de référence de l'outil de rectification, et la position angulaire de rotation de la broche de dressage (21) par rapport à l'axe de broche de dressage (S2) et le déplacement le long du troisième axe de déplacement linéaire (Y1) en fonction de la position angulaire de rotation de la broche d'outil (18) par rapport à l'axe de broche d'outil (B1) sont contrôlés selon un procédé de dressage de forme.

10. Procédé selon la revendication 9, **caractérisé en ce que** le mouvement le long du deuxième axe de déplacement linéaire (Z2) est également contrôlé dans le cas d'un outil de rectification sans torsion.
